# EUROPEAN PATENT SPECIFICATION

(11) **EP 2 281 384 B1**
(45) Date of publication and mention of the grant of the patent: **01.08.2018**
(21) Application number: 09747405.0
(22) Date of filing: 13.05.2009
(51) Int. Cl.: H04M 1/00, H04B 5/00

(54) **MOBILE, COMPACT COMMUNICATION DEVICE INCLUDING RFID**
MOBILES, KOMPAKTES KOMMUNIKATIONSGERÄT MIT RFID
DISPOSITIF DE COMMUNICATION MOBILE, COMPACT À RFID

(30) Priority: 16.05.2008 US 122237
(43) Date of publication of application: 09.02.2011
(73) Proprietor: Brightpoint, Inc., Indianapolis, IN 46278 (US)
(72) Inventor: FIVEL, Steven, E., Carmel, IN 46032 (US)
(74) Representative: Barker Brettell LLP
(86) International application number: PCT/US2009/043692
(87) International publication number: WO 2009/140321

(56) References cited:
- EP-A2- 1 722 322
- WO-A2-02/21424
- JP-A- 2004 252 566
- JP-A- 2004 307 095
- US-A1- 2003 146 821
- US-A1- 2005 006 469
- US-A1- 2007 005 173
- US-A1- 2007 210 173
- US-A1- 2007 281 549

## Description

The present invention relates generally to mobile communication devices, such as mobile telephones, and more particularly in such devices and systems for distribution and activation in combination with a variety of other features, including RFID's.

### BACKGROUND

Mobile communication devices, such as mobile telephones, PDAs, GPS units and the like are sold by the millions. After the handsets are manufactured, they are packaged for resale and distribution. They may be returned for repair, replacement or otherwise.

Inclusion of an RFID in a mobile telephone is known. For example, U.S. Patent Publication No. US 2006/0111053A1 is example of such phone. For example, it uses an RFID (Radio Frequency Identification) to identify the owner of the mobile telephone and to issue a message to another person via the phone network.

U.S.patent publication number U.S. 2007/0281549 A1 discloses an assembly of SIM card and RFID antennae used in a mobile phone so as to provide mobile wallet applications for the end-user. A circuit is provided on a printed circuit capable of executing SIM and RFID functions, and the RFID antennae function is connected to the coil antennae installed on the back casing of the handset to provide mobile wallet applications.

### SUMMARY

The present invention provides a mobile, compact communication device having a first RFID, and a subscriber identification module having a second RFID having an identifier that is different from an identifier of the first RFID. Other optional features include a mailer for shipping the device back to a distributor; and, a retail sale location having one or more RFID readers to read retail purchases of mobile communication devices, accessories, or both. Optionally, the present invention provides a process of maintaining a bulk inventory of communication devices and of subscriber identification modules having RFIDs, and radio frequency scanning the RFIDs and inputting the information into a computer database.

The foregoing summary is not limiting, and the claims, and only the claims, define the invention.

An object of the present invention is to provide an improved mobile, compact communication device, and/or a device in combination with other features, and/or a process regarding maintaining inventory and scanning thereof.

### DESCRIPTION OF THE DRAWING FIGURES

FIG. 1 is a sample mobile, compact communication device having an RFID and a SIM having a second RFID.
FIG. 2 is a sample schematic diagram showing assembly/packaging for mobile, compact communication devices.
FIG. 3 is a sample schematic diagram showing a retail sales location providing mobile, compact communication devices and/or accessories.
FIG. 4 is a sample diagram of a mobile, compact communication device and a mailer having an RFID.

### DESCRIPTION OF THE PREFERRED EMBODIMENT

For the purposes of promoting an understanding of the principles of the invention, reference will now be made to the examples herein and specific language will be used to describe the same. It will nevertheless be understood that no limitation of the scope of the invention is thereby intended. Any alterations and further modifications in the described processes, systems or devices, any further applications of the principles of the invention as described herein, are contemplated as would normally occur to one skilled in the art to which the invention relates.

As used in the claims and the specification, the following terms have the following definitions:
The term "accessory" means a charger (wall outlet and/or cigarette lighter and/or computer UBS charger, or otherwise), computer synchronization linkage, case, printed material (including instructions, mailer, computer software), earpiece (wireless and/or wired).

The term "accompanied" means attached to or as part of the same packaging.

The term "after" means chronologically later in time, and includes immediately after, as well as after with intervening acts or events.

The term "associate" means to have computer coding and/or characters and/or programming to link a particular field, character or data string to another field, character or data string. This would include, for example, a relationship in a relational database, joins between tables, and/or in a query structure which returns the association.

The term "bulk inventory" means an inventory of at least ten like items.

The term "communication network" is a network of hardware and software to facilitate mobile, compact communication devices providing telecommunication therebetween. This typically includes towers, such as cell towers or otherwise, as well as associated phone lines, wiring, and the internet. Examples in the U.S. are mobile phone networks run by companies such as Sprint®, AT&T®, Verizon® and others.

The term "computer database" has its ordinary meaning, and includes data stored in an organized way electronically in computer memory. Examples include databases in SQL, visual basic, and otherwise. Typically, data is stored in one or more data tables. A computer database does not necessarily have to reside on a single computer, and can comprise several separate databases and/or tables and are linkable to each other.

The term "computer network" has its ordinary meaning, including the local area network as well as networking of computers over geographic distances. One example of such computer networking is computer networking over the internet. Other examples include dedicated linking, phone lines, microwave towers, fiber optic lines, or otherwise. The network can include hybrids and combination of the foregoing.

The term "computer system" includes one or more computer processors, either in individual servers or separate servers, as well as any computer network required to allow separate microprocessors and/or servers to electrically transmit information to and/or from each other.

The term "distributor" means an entity or facility (typically a company) in the distribution chain between an OEM of mobile, compact communication devices and the end-user/subscriber.

The term "electronically transmitting" means the transmission of information, digitally or analog, locally, or across distance using electrical telecommunication signals.

The term "identifier" and "identities" mean a unique, (or at least relatively unique within a defined universe of items), series of numbers, letters, characters or any combination thereof.

The term "information regarding said subscriber identification module" means any identifier corresponding to a subscriber/end user, such as for example their name, phone number or other personal or financial information that is stored in their subscriber identification module.

The terms "installable" and "installed" mean placed into or made a part of. This includes, but is not limited to, plugging a module or card into a slot or a receptacle.

The term "mailer" means a label, and/or a pre-printed shipping envelope, box or other package, having pre-printed address information for the recipient. Such a recipient can include, without limitation, a distributor or its agent.

The term "mobile, compact communication device" means an electronic device such as a mobile phone (cellular or otherwise), PDA, global positioning satellite unit, mp3 or other music or video players, and/or any combination of the foregoing alone or with other features that is electronic, and may be handheld, namely conveniently held in a single adult hand, and that provide for voice communication. These devices typically, but not necessarily, are battery powered, but also could include a solar powered hand held devices.

The term "packaging" means any container, box, clam shell, mailer, or otherwise.

The term "placing" means locating or putting on or in, and may be done robotically, manually, gravity fed, otherwise, and/or a combination thereof.

The term "purchase data" means information collected at the retail sales location corresponding to a retail transaction.

The term "radio frequency scanning" means using radio frequency waves to initiate a signal from an RFID to be read.

The term "reading proximity" means a physical distance within which an RFID may be accurately read using radio frequency scanning.

The term "retail display" means a rack, shelf, vending machine, kiosk, in which a retail item, such as a wireless communication device and/or accessory, may be viewed by a prospective purchaser.

The terms "retail sale location" and "retail point of sale" mean a location where the purchaser may make a retail purchase, including a store, vending machine, kiosk, or otherwise. The retail point of sale also may include a purchase made on the internet by a purchaser, with the product shipped to them.

The term "RFID" means radio frequency identification , including those with an on board power source, such as battery as well as without an on-board power source. Such RFIDs may use one or more of a variety of frequencies. The RFID may be read only, read write, write-once-read-many, or otherwise. The RFID may be active, passive, semi-active, semi-passive or otherwise. It may use a reader talks first, tag talks first or other protocol. The RFIDs may be chipless, including those printed directly on to an object. The RFID may be attachable, implantable, and/or inserted and/or otherwise.

The term "RFID reader" means a transmitter, receiver, and/or a transceiver for radio frequency scanning of RFIDs.

The terms SIM and "subscriber identification module" mean a memory chip or other media corresponding to an identifier for phone number or other such address or identifier for a mobile, compact communication device. A SIM may be included in another device, such as a SIM card which may be installed in a mobile communication device. The SIM may be operated with a variety of communication networks, including without limitation the global system for mobile communication (GSM) as well as a code division of multiple access (CDMA) network. A SIM may also included a reusable identification module. A SIM may store a service-subscriber key (IMSI) or other such information or code to identify a user/subscriber. A SIM card may include universal subscriber identification module (USIM) and/or removable user identification module (RUIM). The SIM may include a variety of information, including without limitation, ICCID, IMSI, authentication key, local area identification, operator/specific emergency number, SMSC, service provider name, service dialing numbers, advice of charge parameters, value added service applications, and others. The SIM may include an international mobile equipment identity (IMEI). The SIM may be a single SIM, a dual SIM or multiple SIM.

The term "tracking inventory" means maintaining, at least temporarily, in computer memory the quantity of a type of item(s) for one or more groupings or locations.

The term "visual indicia" includes human readable and/or machine readable (whether or not human readable) indicators on or connected to the tray. These can include differences in color, marking, shaped object, barcodes and related machine readable patterns, arrows, embossments, and shapes.

The language used in the claims and specification is to only have its plain and ordinary meaning, except as explicitly defined above. The words in the above definitions are to only have their plain and ordinary meaning. Such plain and ordinary meaning is inclusive of all consistent dictionary definitions from the most recently published Webster's dictionaries and Random House dictionaries.

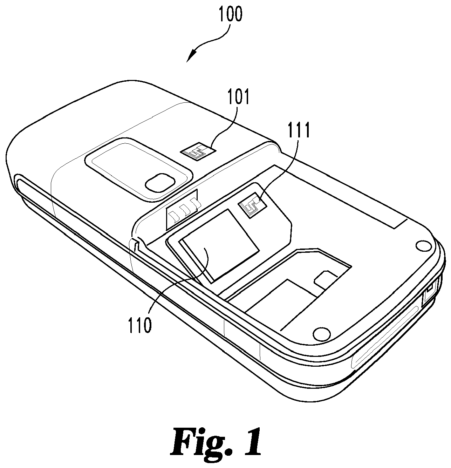

Referring to Fig. 1, mobile communication device 100 is shown. Optionally, but preferably, it includes RFID 101. Note that in the drawing example of Fig. 1, RFID 101 is shown at or near the back surface of device 100. However, RFID may be located anywhere on or in device 100. RFID 101 may be added by the OEM of device 101 or retrofitted thereon. RFID 101 may be a stand alone RFID tag and/or may be incorporated or printed in or on one or more circuit boards of other part of device 100.

Subscriber identification module (SIM) 110 is shown being installed in device 100. SIM 110 optionally, but preferably, includes RFID 111. Note that in the drawing example of Fig. 1, RFID 101 is shown at or near the back surface of device 100. However, RFID may be located anywhere on or in device 100. RFID 101 may be added by the OEM of device 101 or retrofitted thereon. RFID 101 may be a stand alone RFID tag and/or may be incorporated or printed in or on one or more circuit boards of other parts of SIM 110.

Preferably, SIM 110 is in the form of a SIM Card, such as of the type that may be installed in a slot in device 100. Optionally, SIM may be installed in the phone in other ways. Fig. 1 is merely one example of a device 100, in this case a mobile telephone. Optionally, SIM 110 is physically mounted in and is removable from device 100. Other such mobile, compact communication devices are also contemplated.

Optionally, but preferably, neither RFID 101 nor RFID 111 include transmittable information regarding the SIM. For example, optionally, such RFID's would not be connected to or interface with the communications network. Also, optionally, such RFID's would not be connected to or interface with the SIM. Optionally, such RFID's may be independent from and blind of the identifier(s) stored in the SIM.

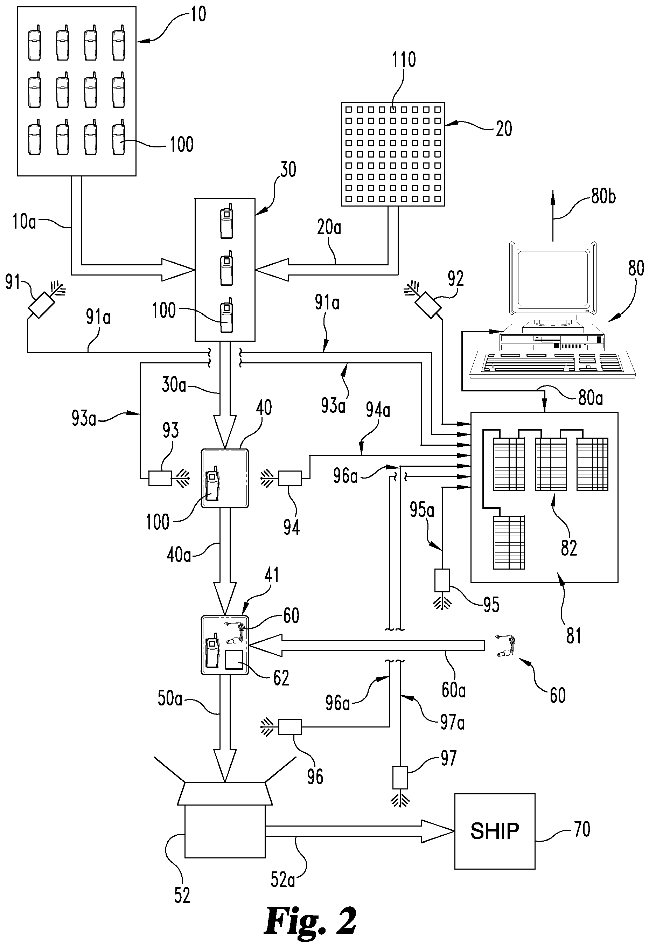

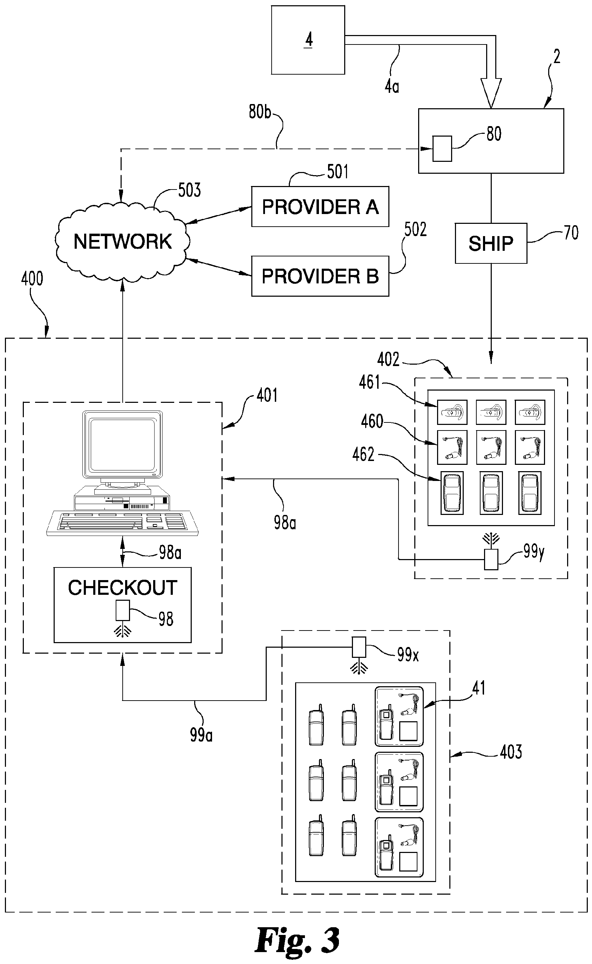

Fig. 2 shows a schematic diagram showing one example of an assembly/packaging system for mobile communication devices. Note that the features of Fig. 2 are reflected as distribution center 2 in Fig. 3, including computer system 80 and shipment 70.

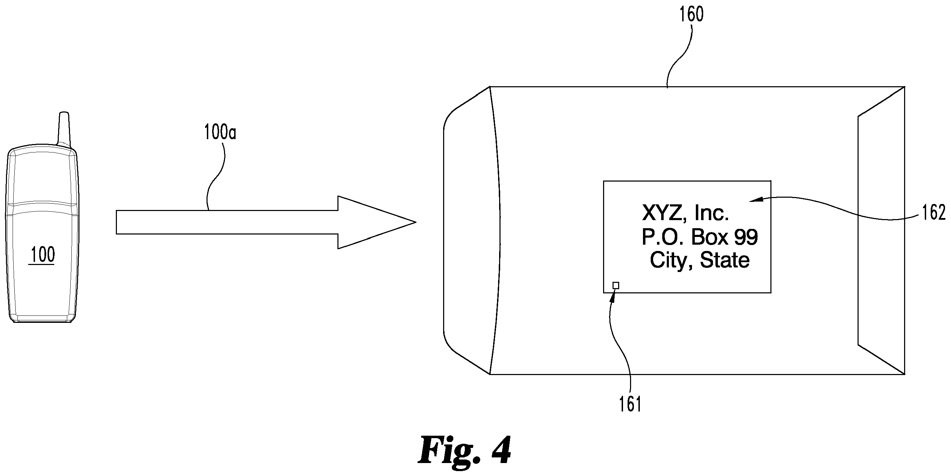

Fig. 2 optionally includes an inventory 10 of mobile, compact communication devices 100, and an inventory 20 of SIM's 110. The devices and SIM's may be combined 10a, 20a at assembly station 30. Note that mobile communication device 100 shown at station 30 includes SIM 110. Device 100 is combined 30a with device packaging 40. Such packaging may take any form including, but not limited to, cardboard or plastic boxes, trays, clam shells and otherwise. Package 40 is combined 40a to form package 41 optionally including accessory 60 and optional accessory 62. In the particular, non-limited example shown in Fig. 2, accessory 60 is a device charger and accessory 62 is printed material, such as instruction sheet, and mailer (seen as one optional example mailer 162 in Fig. 4), computer readable software, warranty information and/or some or all of the above. Optionally, packaging 41 is place 50a in an outer packaging 52. Typically, such packaging 52 may include a shipping box. Optionally package 52 would include multiple devices 100, typically each in their own package 41. Package 52 is shipped 52a to shipping system 70. Shipping system 70 includes the system of mail, private courier, direct and/or indirect truck/airplane/train or otherwise shipment. Such shipment may be directly to a retail sale location, and/or to intermediate locations.

Optionally, but preferably, computer system 80 is used to track inventory and/or control and/or provide information regarding packaging, combining, shipping and other information. Computer system 80 preferably includes and/or is connected to a computer database 81. Optionally, database 81 includes one or more data tables, such as data table 82. Optionally database 81 and its data tables are a relational database, having relationships between fields and tables, either directly and/or by query structure. Database 81 may also include flat files, character limited files, or otherwise to maintain data. Optionally, data tables may include a data table for devices 100. Optionally, such data table would include one or more of the following fields: manufacturer; model; model number; serial number; optical/bar code number; and (first) RFID identifier, corresponding to RFID 101. Optionally, the data tables in database 81 may include one or more tables for the SIMs 110, including one more of the following optional fields: record number; SIM identification; RFID identifier (preferably corresponding to RFID 111); manufacturer; model number; serial number; ICCID; IMSI; authentication key; local area identity; operator specific emergency number; SMSC (short message service center) number; SPN (service provider name); SDN (service dialing numbers); advice of charge parameters; VAS (value added service) applications. SIM identification can include SIM digits. One optional form has nineteen digits including, optionally, a telecom id, country code, network code, month and year of manufacturing, switch configuration code, SIM number, and check digit. These are in no way limiting, but merely examples based on one form of technology. Other data tables in database 81 may include tables for mailers, such as mailer 162 which optionally includes RFID 161. Fields with such table can include record number, addressee, mailing address, city, state, country and postal code; an RFID identifier (corresponding to RFID 161), bar code or other machine readable visual indicia; pre-paid mailing permit numbering. Database 81 may also optionally include one or more tables dealing with accessories, such tables can include fields for: manufacturers; model, model numbers; serial number; optical/bar code number; and, RFID identifier; and product name, among others.

Such database may optionally include information regarding commercial customers. Optionally fields for such data table can include: name; address; account number; financial information (in multiple fields); related end-user/subscriber identifiers; and otherwise. Database 81 may optionally include one or more data tables for the end user/subscriber. Such tables may optionally include the following fields: customer name; customer address (potentially multiple fields); account number; RFID identifier for mobile communication device; RFID identifier for SIM's; RFID identifier for mailer; RFID identifier for one or more accessories; plan number; service provider; other people/phone/devices on the same account; and otherwise. Database 81 may optionally include one or more tables for service providers for communications network. Such data tables could optionally include the following fields: provider name; provider address; provider numeric codes; provider plan codes; SIM identifiers; customer/end-user identifiers; and otherwise. The foregoing list of tables is not exhaustive, but merely as set forth as optional examples. They (the databases, tables and/or fields) may be added to, omitted and/or split.

Moreover, the foregoing tables need not reside in a single database, but may reside in more than one database, including more than one database on various computer servers, either on a local area network, directly connected, internet based connection, or otherwise. Note that one such connection of computer system 80 as shown in Fig. 3 has network connection 80b, which includes optionally, via networking, connections with a retail sales location 14, service provider A at 501, service provider B at 502 and optionally others.

The schematic diagram of Fig. 2 also illustrates the optionally use of RIFD readers. Such reader or readers is preferably connected, directly or indirectly, to database 81 with electronically transmitting connections. For example, optional RFID reader 97 is connected to database 81, or any other database, by electrically transmitting connection 97a. Such connection may by wire, by radio transmission or otherwise. Preferably, such RFID readers are placed in reading proximity to the RFIDs being read. For example, RFID reader 97 is placed in reading proximity of packaging 52 being sent 52a to shipping, such as to read the RFIDs, such as RFID 101 and/or RFID 111, within packaging 41 within packaging 52. Preferably, there is at least one such RFID reader, such RFID reader 97, at least once prior to shipping 70 out of distribution center 2.

However, optionally, but preferably, more than one RFID readers are used. Optionally, such RFID readers may be placed at one or more locations along the distribution assembly and packaging as shown in Fig. 2. For example, RFID reader 91 and electrically transmitting connection 91a detect RFIDs 101 from inventory 10. RFID reader 92 and its associated connection detect RFIDs, such as RFID 111 for the SIMs from inventory 20. RFID reader 93 and connection 93a, and optionally RFID reader 94 and connection 94a, read one or more of the RFIDs (101, 111) before, during or after packaging 40. RFID reader 95 and associated connection 95a read RFIDs in, associated with, attached to, or a part of accessories, such as accessory 60 and/or packaging for such accessory before, during or after its inclusion of packaging 41. RFID reader 96 and its associated connection 96a read one or more of the RFIDs from the accessory, SIM and/or device 100 (including RFIDs 101 and 111) and/or RFID 161 from mailer 162, and any other RFID and/or article associated with such RFID, in such packaging, before, during or after packaging 41. Optionally, but preferably, the various readers, 91, 92, 93, 94, 95, 96, 97 do not have overlapping, or substantially overlapping reading proximity. This optional feature allows for more accurate inventory tracking. These various RFID readers are exemplary, may be omitted, added to or modified in location.

Referring to Fig. 3, an optional set of process acts and/or system features is shown schematically at a retail sales location providing mobile communication devices and/or accessories. This is not required in connection with the device of Fig. 1, nor with the process and system of Fig. 2, but optionally may be used in connection therewith. In that regard, distribution center 2 includes computer system 80 previously described. The retail sale location 400 preferably is a retail store in which customers, typically end-user/subscribers, purchase their communication devices and/or accessories. However, retail sale location 400 may be also a kiosk or a vending machine, with or without a human attendant, to allow the purchase of device 100 and/or accessories.

Moreover, the network 503 connecting distributor 2, retail sale location 400, provider A (501) and/or provider B (502) preferably is, or at least includes, the internet or a variation of the internet, but also may include telephone wires, optical cables and other telecommunication technologies. Provider, such as provider A, shown at 501 typically are providers of a communication network. The same is true for provider B (502). Popular, but non-limiting examples of such providers include without limitation, Sprint®, Nextel®, AT&T®, Verizon® and others.

Fig. 3, optional retail sales location 400 optionally includes a customer checkout 401, one or more accessory displays 402, and one or more mobile communication device displays 403. The displays may optionally include mobile communication devices along with accessories, along with packaged kits 41 which in and of themselves include a mobile communication device along with one more accessories. Examples of accessories in display 402 can include earpieces 461, chargers 460, cases 462 as well as any other type of accessory.

Checkout 401 preferably includes a cash register (which normally includes a computer) and/or a computer and/or credit card, debit card, stored value card type processing readers. Optionally, but preferably, such checkout computer is a connection 98b with a network 503
as illustrated in Fig. 1, typically an internet connection or otherwise. Checkout preferably includes an RFID reader 98 with a connection thereof 98a to the checkout computer system. Accordingly, as part of the checkout process, RFIDs in the mobile communication device, 101, SIM 111 and/or RFIDs in the accessories, and/or RFIDs in the other packaging, including RFID 161, may be detected at checkout by reader 98. Preferably, RFID reader 98 is within reading proximity of the checkout process, whether by cash register, vending machine, or otherwise. In this way, when a mobile communication device and/or an associated SIM 110 is purchased, associated information may be transmitted via connection 98b to the network. Moreover, purchase data and purchaser information via the checkout transaction may likely be transmitted via connection 98b. Such information can be obtained from the purchasing instrument (credit card, debit card, or otherwise) and/or by questionnaire (either in human or entered by the purchaser) for other information. Such information can include the subscriber's name, address, payment information (e.g., credit card number), service provider selected (see 501, 502), plan type selected, contract duration and otherwise. This purchase data may be stored in a flat file, data table, or otherwise. This is normally transmitted at least to the selected provider (e.g., provider B, 502) either at the time of purchase or later to allow activation of the device 100 by the service provider.

Optionally, another RFID reader 99y at the retail sale location is in reading proximity to retail display 402 of accessories for mobile communication devices. Reader 99y is enabled to read RFID identifiers from the addition to inventory and the removal from inventory (such inventory being the inventory on display at display 402) selected from a group comprising mobile communication devices, one ore more accessories from mobile communication devices or both. A computer at checkout 401 receives such inventory addition and/or subtraction information from connection 99a. It may optionally be temporarily stored at the retail computer, and later transmitted to the network via connection 98b to be transmitted to computer 80 of the distributor 2 via connection 80b for real time, or near real time, or same day, or same week, or same month inventory control. Alternatively, such signal may be processed as part of the checkout process. This allows distributor 2 to plan and ship 70 to the retail location 400, as well as other such retail locations, in order to maintain inventory stocked and/or optimize inventory levels. This is true to only for accessories, but also for mobile communication devices provided from distributor 2 to retail location 400.

Optional RFID reader 99x is connected to the retail computer via connection 99a and is in reading proximity of display 403. Optional reader 99x correspondingly works in a manner similar to reader 99y for the other display. Optionally, but preferably, the reader 98 at checkout and the reader 99y at display 402 and the reader 99x at display do not have overlapping, or substantially overlapping reading proximity. This optional feature allows for more accurate inventory tracking. As illustrated, since mobile communication devices are included in display 403, reader 99x may likewise maintain inventory location in display 403 for mobile communication device as well, includes RFIDs such as RFID 101 and/or 111.

In Fig. 3, optional return step 4 includes shipping 4a of a mailer back to a location such as to distributor 2. Such mailer (described further below in connection with 4a) may also be shipped to a party other than distributor 2, including without limitation a third party handler who forwards the items to distributor 2, a reseller, an environmental recycler, a customer, a supplier, a charity, or otherwise.

Referring to Fig. 4, this diagrams the optional use of a mailer 162 on a shipping package 160 (such as an envelope, box or otherwise) in which a mobile communication device 100 is inserted 100a into it. Optionally, but preferably, mailer 162 includes its own RFID 161. This optional feature helps process intake of the mailer at the distributor 2 or other recipient. As illustrated, mailer 162 optionally, but preferably, is pre-printed with an address of the destination, such as shown "XYZ, Inc." with this corresponding to distributor 2 or other designation. Optionally, however, RFID 161 may be omitted, relying for intake purposes instead on one or more of the RFIDs 101 and/or 111 as attached to the mobile communication device, the SIM and/or to an accessory as previously described.

Optionally, mobile communication devices, SIMs, accessories, mailers, and/or packaging thereto may have bar codes or other such machine readable visual indicia, with corresponding readers at one or more locations, such as optionally where the various RFID readers in the drawing figures are shown and described.

The present invention contemplates modifications as would occur to those skilled in the art (now and in the future). It is also contemplated that processes embodied in the present invention can be altered, rearranged, substituted, deleted, duplicated, combined, or added to other processes without departing from the spirit of the present invention. In addition, the various stages, steps, procedures, techniques, phases, and operations within these processes may be altered, rearranged, substituted, deleted, duplicated, or combined as would occur to those skilled in the art. The articles "the", "a" and "an" are not necessarily limited to mean only one, but rather are inclusive and open ended so as to include, optionally, multiple such elements.

## Claims

1. A system comprising:
mobile, compact communication device for allowing voice communication using a communication network;
said mobile communication device having a first RFID;
a subscriber identification module in said mobile communication device; and,
said subscriber identification module having a second RFID having an identifier that is different from an identifier of said first RFID; and a computer database, said database storing identifiers of said mobile communication device with associated first RFID's, said database storing identities of said subscriber identification module with associated second RFID's, said database storing associations between said first RFID's identifiers and said second RFID's identifiers.

2. The system of claim 1 wherein
(a) neither said first RFID nor said second RFID include transmittable information regarding said subscriber identification module; or
(b) said subscriber identification module, with said second RFID, is physically mounted in and is removable from said mobile communication device.

3. A combination of the system of claim 1 and:
(a) at least one accessory for said mobile communication device, wherein said accessory has a third RFID attached to either it or its packaging and wherein said third RFID has an identifier that is different from identifiers of said first RFID and of said second RFID; or
(b) at a retail sale location, a first retail RFID reader in reading proximity to a retail check-out, said first retail RFID reader to read RFID identifiers from retail purchase selected from the group of: (a) mobile communication device, (b) an accessory for a mobile communication device, or, (c) both a mobile communication device and an accessory; or
(c) a mailer for shipping of said mobile communication device, said mailer having a mailer RFID.

4. A combination of claim 2, option (a) and at least one accessory for said mobile communication device, wherein said accessory has a third RFID attached to either it or its packaging and wherein said third RFID has an identifier that is different from identifiers of said first RFID and of said second RFID.

5. The combination of claim 3, option (b), further comprising, at retail sale locations, a second retail RFID reader in reading proximity to a retail display of accessories for mobile communication devices, said second retail RFID reader to read RFID identifiers from the addition to inventory and the removal from inventory of items selected from the group comprising: (a) mobile communication device, (b) an accessory for a mobile communication device, or, (c) both a mobile communication device and an accessory; and wherein optionally the combination further comprises at least one computer to forward from said retail locations RFID identifier data to a database to associate said purchase data with corresponding mobile communication device subscribers.

6. The combination of claim 4 wherein said subscriber identification module, with said second RFID, is physically mounted in and is removable from said mobile communication device.

7. The combination of claim 6, wherein the combination further comprises, at a retail sale location, a first retail RFID reader in reading proximity to a retail check-out, said first retail RFID reader to read RFID identifiers from retail purchase selected from the group of: (a) mobile communication device, (b) an accessory for a mobile communication device, or, (c) both a mobile communication device and an accessory.

8. The combination of claim 7, wherein the combination further comprises, at retail sale locations, a second retail RFID reader in reading proximity to a retail display of accessories for mobile communication devices, said second retail RFID reader to read RFID identifiers from the addition to inventory and the removal from inventory of items selected from the group comprising: (a) mobile communication device, (b) an accessory for a mobile communication device, or, (c) both a mobile communication device and an accessory.

9. The combination of claim 8, wherein the combination further comprises at least one computer to forward from said retail locations RFID identifier data to a database to associate said purchase data with corresponding mobile communication device subscribers.

10. The combination of claim 9 wherein said mobile communication device is accompanied by a mailer for shipping of said mobile communication device, said mailer having a mailer RFID.

11. A process comprising the acts of:
maintaining a bulk inventory of mobile, compact communication devices for allowing voice communication using a communication network, said mobile communication device devices having a first RFID;
maintaining a bulk inventory of subscriber identification modules installable in said mobile communication devices, said modules having a second RFID having an identifier that is different from an identifier of said first RFID;
installing subscriber identification modules in corresponding one of said communications devices;
radio frequency scanning said first RFID and said second RFID;
inputting to a computer system computer database identifiers from said scanning from said first RFID's and said second RFID's, said database storing associations between said first RFID identifiers and said second RFID identifiers.

12. The process of claim 11 wherein:
(a) the process further comprises the acts of: placing said communications device in a package; and, placing at least one accessory for said mobile communication device in said package, wherein said accessory has a third RFID and wherein said third RFID has an identifier that is different from identifiers of said first RFID and of said second RFID; or
(b) the process further comprises the acts of: placing said communications device in a package; and, wherein the act of radio frequency scanning occurs after the act of placing said communications device in said package; or
(c) the process further comprises the act of: electronically transmitting to a service provider for said communications network data from said database including said identifiers for said first RFID's and for said second RFID's, and for said associations between said first RFID identifiers and said second RFID identifiers; or
(d) the process further comprises the acts of tracking inventory of said communications devices based on scanning said first RFID and tracking inventory of said subscriber identification modules based on scanning said second RFID; or
(e) the process further comprises the act of: shipping communications devices to a retail sale location, wherein said retail sale location includes: a first retail RFID reader in reading proximity to a retail check-out, said first retail RFID reader enabled to read RFID identifiers from retail purchase selected from the group of: (a) mobile communication device, (b) an accessory for a mobile communication device, or, (c) both a mobile communication device and an accessory; a second retail RFID reader in reading proximity to a retail display of accessories for mobile communication devices, said second retail RFID reader enabled to read RFID identifiers from the addition to retail inventory and the removal from retail inventory of items selected from the group comprising: (a) mobile communication device, (b) an accessory for a mobile communication device, or, (c) both a mobile communication device and an accessory; or
(f) the process further comprises the act of placing in a package with said communications device a mailer for shipping of said mobile communication device, said mailer having a mailer RFID.

13. The process of claim 12, wherein
(i) the process is in accordance with option (a) and wherein the act of radio frequency scanning occurs after the act of placing said communications device in said package; or
(ii) the process is in accordance with option (e) and further comprises the act of electronically transmitting from said retail locations RFID identifier data to a database to associate said purchase data with corresponding mobile communication device subscribers.

14. The process of claim 13, option (i), the process further comprising the act of: electronically transmitting to a service provider for said communications network data from said database including said identifiers for said first RFID's and for said second RFID's, and for said associations between said first RFID identifiers and said second RFID identifiers.

15. The process of claim 14, the process further comprising the acts of tracking inventory of said communications devices based on scanning said first RFID and tracking inventory of said subscriber identification modules based on scanning said second RFID.

16. The process of claim 15, the process further comprising the act of: shipping communications devices to a retail sale location, wherein said retail sale location includes: a first retail RFID reader in reading proximity to a retail check-out, said first retail RFID reader enabled to read RFID identifiers from retail purchase selected from the group of: (a) mobile communication device, (b) an accessory for a mobile communication device, or, (c) both a mobile communication device and an accessory; a second retail RFID reader in reading proximity to a retail display of accessories for mobile communication devices, said second retail RFID reader enabled to read RFID identifiers from the addition to retail inventory and the removal from retail inventory of items selected from the group comprising: (a) mobile communication device, (b) an accessory for a mobile communication device, or, (c) both a mobile communication device and an accessory.

17. The process of claim 16, the process further comprising the act of electronically transmitting from said retail locations RFID identifier data to a database to associate said purchase data with corresponding mobile communication device subscribers; and wherein optionally the process further comprises the act of placing in said package a mailer for shipping of said mobile communication device, said mailer having a mailer RFID.

## Patentansprüche

1. System umfassend:
eine mobile, kompakte Kommunikationsvorrichtung zum Ermöglichen von Sprachkommunikation unter Verwendung eines Kommunikationsnetzes;
wobei die mobile Kommunikationsvorrichtung eine erste RFID aufweist;
ein Teilnehmeridentifikationsmodul in der mobilen Kommunikationsvorrichtung; und
wobei das Teilnehmeridentifikationsmodul eine zweite RFID mit einem Identifikator, der sich von einem Identifikator der ersten RFID unterscheidet, und eine Computerdatenbank aufweist, wobei die Datenbank Identifikatoren der mobilen Kommunikationsvorrichtung mit damit verknüpften ersten RFID's speichert, wobei die Datenbank Identitäten des Teilnehmeridentifikationsmoduls mit damit verknüpften zweiten RFID's speichert, wobei die Datenbank Verknüpfungen zwischen den ersten RFID-Identifikatoren und den zweiten RFID-Identifikatoren speichert.

2. System nach Anspruch 1, wobei
(a) weder die erste RFID noch die zweite RFID übertragbare Information bezüglich des Teilnehmeridentifikationsmoduls aufweisen; oder
(b) das Teilnehmeridentifikationsmodul mit der zweiten RFID physikalisch in der mobilen Kommunikationsvorrichtung montiert ist und von dieser entfernbar ist.

3. Kombination aus dem System nach Anspruch 1 und:
(a) zumindest einem Zubehör für die mobile Kommunikationsvorrichtung, wobei das Zubehör eine dritte RFID aufweist, die entweder an ihm oder seiner Verpackung befestigt ist, und wobei die dritte RFID einen Identifikator aufweist, der sich von den Identifikatoren der ersten RFID und der zweiten RFID unterscheidet; oder
(b) in einem Einzelhandelsgeschäft, einem ersten Einzelhandels-RFID-Lesegerät in Lese-Nähe zu einer Einzelhandelskasse, das Einzelhandels-RFID-Lesegerät zum Lesen von RFID-Identifikatoren von einem Einzelhandelserwerb ausgewählt aus der Gruppe aus: (a) einer mobilen Kommunikationsvorrichtung, (b) einem Zubehör für eine mobile Kommunikationsvorrichtung oder (c) sowohl einer mobilen Kommunikationsvorrichtung als auch einem Zubehör; oder
(c) einem Mailer für den Versand der mobilen Kommunikationsvorrichtung, wobei der Mailer eine Mailer-RFID aufweist.

4. Kombination nach Anspruch 2, Option (a) und zumindest einem Zubehör für die mobile Kommunikationsvorrichtung, wobei das Zubehör eine dritte RFID aufweist, die entweder an ihm oder seiner Verpackung befestigt ist, und wobei die dritte RFID einen Identifikator aufweist, der sich von den Identifikatoren der ersten RFID und der zweiten RFID unterscheidet.

5. Kombination nach Anspruch 3, Option (b), weiter umfassend, in Einzelhandelsgeschäften, ein zweites Einzelhandels-RFID-Lesegerät in Lese-Nähe zu einem Verkaufsdisplay für Zubehör für mobile Kommunikationsvorrichtungen, das zweite Einzelhandels-RFID-Lesegerät zum Lesen von RFID-Identifikatoren von der Hinzufügung zum Bestand und der Entfernung vom Bestand von Waren ausgewählt aus der Gruppe, umfassend: (a) eine mobile Kommunikationsvorrichtung, (b) ein Zubehör für eine mobile Kommunikationsvorrichtung oder (c) sowohl eine mobile Kommunikationsvorrichtung als auch ein Zubehör; und wobei die Kombination optional weiter zumindest einen Computer umfasst, um RFID-Identifikator-Daten von den Einzelhandelsstandorten an eine Datenbank zu übermitteln, um die Erwerbsdaten mit korrespondierenden mobile Kommunikationsvorrichtungs-Teilnehmern zu verknüpfen.

6. Kombination nach Anspruch 4, wobei das Teilnehmeridentifikationsmodul mit der zweiten RFID physikalisch in der mobilen Kommunikationsvorrichtung montiert ist und von dieser entfernbar ist.

7. Kombination nach Anspruch 6, wobei die Kombination weiter umfasst, in einem Einzelhandelsgeschäft, ein erstes Einzelhandels-RFID-Lesegerät in Lese-Nähe zu einer Einzelhandelskasse, das erste Einzelhandels-RFID-Lesegerät zum Lesen von RFID-Identifikatoren von Einzelhandelserwerb ausgewählt aus der Gruppe aus: (a) einer mobilen Kommunikationsvorrichtung, (b) einem Zubehör für eine mobile Kommunikationsvorrichtung oder (c) sowohl einer mobilen Kommunikationsvorrichtung als auch einem Zubehör.

8. Kombination nach Anspruch 7, wobei die Kombination weiter umfasst, in Einzelhandelsgeschäften, ein zweites Einzelhandels-RFID-Lesegerät in Lese-Nähe zu einem Verkaufsdisplay für Zubehör für mobile Kommunikationsvorrichtungen, das zweite Einzelhandels-RFID-Lesegerät zum Lesen von RFID-Identifikatoren von der Hinzufügung zum Bestand und der Entfernung vom Bestand von Waren ausgewählt aus der Gruppe, umfassend: (a) eine mobile Kommunikationsvorrichtung, (b) ein Zubehör für eine mobile Kommunikationsvorrichtung oder (c) sowohl eine mobile Kommunikationsvorrichtung als auch ein Zubehör.

9. Kombination nach Anspruch 8, wobei die Kombination weiter zumindest einen Computer umfasst, um RFID-Identifikatordaten von den Einzelhandelsstandorten an eine Datenbank zu übermitteln, um die Erwerbsdaten mit korrespondierenden mobile Kommunikationsvorrichtungs-Teilnehmern zu verknüpfen.

10. Kombination nach Anspruch 9, wobei die mobile Kommunikationsvorrichtung von einem Mailer für den Versand der mobilen Kommunikationsvorrichtung begleitet wird, wobei der Mailer eine Mailer-RFID aufweist.

11. Verfahren umfassend die Handlungen von:
Führen eines Massenbestandes von mobilen, kompakten Kommunikationsvorrichtungen zum Ermöglichen von Sprachkommunikation unter Verwendung eines Kommunikationsnetzes, wobei die mobilen Kommunikationsvorrichtungen eine erste RFID aufweisen;
Führen eines Massenbestandes von Teilnehmeridentifikationsmodulen, die in den mobilen Kommunikationsvorrichtungen installierbar sind, wobei die Module eine zweite RFID mit einem Identifikator, der sich von einem Identifikator der ersten RFID unterscheidet, aufweisen;
Installieren von Teilnehmeridentifikationsmodulen in korrespondierenden von den Kommunikationsvorrichtungen;
Radiofrequenzabtasten der ersten RFID und der zweiten RFID;
Eingeben von Computerdatenbank-Identifikatoren von dem Abtasten von den ersten RFID's und den zweiten RFID's in ein Computersystem, wobei die Datenbank Verknüpfungen zwischen den ersten RFID-Identifikatoren und den zweiten RFID-Identifikatoren speichert.

12. Verfahren nach Anspruch 11, wobei:
(a) das Verfahren weiter umfasst die Handlungen von: Platzieren der Kommunikationsvorrichtung in eine Verpackung und Platzieren zumindest eines Zubehörs für die mobile Kommunikationsvorrichtung in die Verpackung, wobei das Zubehör eine dritte RFID aufweist und wobei die dritte RFID einen Identifikator umfasst, der sich von Identifikatoren der ersten RFID und der zweiten RFID unterscheidet; oder
(b) das Verfahren weiter umfasst die Handlungen von: Platzieren der Kommunikationsvorrichtung in eine Verpackung und wobei die Handlung des Radiofrequenzabtastens nach der Handlung des Platzierens der Kommunikationsvorrichtung in die Verpackung stattfindet; oder
(c) das Verfahren weiter umfasst die Handlung von: elektronisch Übertragen von Daten aus der Datenbank, einschließlich Identifikatoren für die ersten RFID's und für die zweiten RFID's und für die Verknüpfungen zwischen den ersten RFID-Identifikatoren und den zweiten RFID-Identifikatoren, an einen Dienstleister für das Kommunikationsnetz; oder
(d) das Verfahren weiter umfasst die Handlungen von Verfolgen von Bestand von den Kommunikationsvorrichtungen basierend auf Abtasten der ersten RFID und Verfolgen von Bestand von den Teilnehmeridentifikationsmodulen basierend auf Abtasten der zweiten RFID; oder
(e) das Verfahren weiter umfasst die Handlung von: Versenden von Kommunikationsvorrichtungen an ein Einzelhandelsgeschäft, wobei das Einzelhandelsgeschäft aufweist: ein erstes Einzelhandels-RFID-Lesegerät in Lese-Nähe zu einer Einzelhandelskasse, wobei das erste Einzelhandels-RFID-Lesegerät in der Lage ist zum Lesen von RFID-Identifikatoren von Einzelhandelserwerb ausgewählt aus der Gruppe aus: (a) einer mobilen Kommunikationsvorrichtung, (b) einem Zubehör für eine mobile Kommunikationsvorrichtung oder (c) sowohl einer mobilen Kommunikationsvorrichtung als auch einem Zubehör; ein zweites Einzelhandels-RFID-Lesegerät in Lese-Nähe zu einem Verkaufsdisplay für Zubehör für mobile Kommunikationsvorrichtungen, wobei das zweite Einzelhandels-RFID-Lesegerät in der Lage ist zum Lesen von RFID-Identifikatoren von der Hinzufügung zum Einzelhandelsbestand und der Entfernung vom Einzelhandelsbestand von Waren ausgewählt aus der Gruppe, umfassend: (a) eine mobile Kommunikationsvorrichtung, (b) ein Zubehör für eine mobile Kommunikationsvorrichtung oder (c) sowohl eine mobile Kommunikationsvorrichtung als auch ein Zubehör; oder
(f) das Verfahren weiter umfasst die Handlung von Platzieren eines Mailers für den Versand der mobilen Kommunikationsvorrichtung in einer Verpackung zusammen mit der Kommunikationsvorrichtung, wobei der Mailer eine Mailer-RFID aufweist.

13. Verfahren nach Anspruch 12, wobei
(i) das Verfahren in Übereinstimmung mit Option (a) ist und wobei die Handlung des Radiofrequenzabtastens nach der Handlung des Platzierens der Kommunikationsvorrichtung in der Packung stattfindet; oder
(ii) das Verfahren in Übereinstimmung mit Option (e) ist und weiter umfasst die Handlung von elektronisch Übertragen von RFID-Identifikator-Daten von den Einzelhandelsstandorten an eine Datenbank, um die Erwerbsdaten mit korrespondierenden mobilen Kommunikationsvorrichtungs-Teilnehmern zu verknüpfen.

14. Verfahren nach Anspruch 13, Option (i), das Verfahren weiter umfassend die Handlung von: elektronisch Übertragen von Daten aus der Datenbank, einschließlich der Identifikatoren für die ersten RFID's und für die zweiten RFID's und für die Verknüpfungen zwischen den ersten RFID-Identifikatoren und den zweiten RFID-Identifikatoren, an einen Dienstleister für das Kommunikationsnetz.

15. Verfahren nach Anspruch 14, das Verfahren weiter umfassend die Handlungen von Verfolgen von Bestand von den Kommunikationsvorrichtungen basierend auf dem Abtasten der ersten RFID und Verfolgen von Bestand von den Teilnehmeridentifikationsmodulen basierend auf Abtasten der zweiten RFID.

16. Verfahren nach Anspruch 15, das Verfahren weiter umfassend die Handlung von:
Versenden von Kommunikationsvorrichtungen an ein Einzelhandelsgeschäft, wobei das Einzelhandelsgeschäft aufweist: ein erstes Einzelhandels-RFID-Lesegerät in Lese-Nähe zu einer Einzelhandelskasse, wobei das erste Einzelhandels-RFID-Lesegerät in der Lage ist zum Lesen von RFID-Identifikatoren von Einzelhandelserwerb ausgewählt aus der Gruppe aus: (a) einer mobilen Kommunikationsvorrichtung, (b) einem Zubehör für eine mobile Kommunikationsvorrichtung oder (c) sowohl einer mobilen Kommunikationsvorrichtung als auch einem Zubehör; ein zweites Einzelhandels-RFID-Lesegerät in Lese-Nähe zu einem Verkaufsdisplay für Zubehör für mobile Kommunikationsvorrichtungen, wobei das zweite Einzelhandels-RFID-Lesegerät in der Lage ist zum Lesen von RFID-Identifikatoren von der Hinzufügung zum Einzelhandelsbestand und der Entfernung vom Einzelhandelsbestand von Waren ausgewählt aus der Gruppe, umfassend: (a) eine mobile Kommunikationsvorrichtung, (b) ein Zubehör für eine mobile Kommunikationsvorrichtung oder (c) sowohl eine mobile Kommunikationsvorrichtung als auch ein Zubehör.

17. Verfahren nach Anspruch 16, das Verfahren weiter umfassend die Handlung von elektronisch Übertragen von RFID-Identifikator-Daten von den Einzelhandelsstandorten an eine Datenbank, um die Erwerbsdaten mit korrespondierenden mobilen Kommunikationsvorrichtungs-Teilnehmern zu verknüpfen; und wobei optional das Verfahren weiter umfasst die Handlung von Platzieren eines Mailers für den Versand der mobilen Kommunikationsvorrichtung in der Verpackung, wobei der Mailer eine Mailer-RFID aufweist.

## Revendications

1. Système comprenant :
un dispositif de communication mobile compact pour permettre une communication vocale en utilisant un réseau de communication ;
ledit dispositif de communication mobile ayant une première RFID ;
un module d'identification d'abonné dans ledit dispositif de communication mobile ; et,
ledit module d'identification d'abonné ayant une deuxième RFID ayant un identificateur qui est différent d'un identificateur de ladite première RFID ; et une base de données informatique, ladite base de données stockant des identificateurs dudit dispositif de communication mobile avec des premières RFID associées, ladite base de données stockant des identités dudit module d'identification d'abonné avec des deuxièmes RFID associées, ladite base de données stockant des associations entre lesdits identificateurs de première RFID et lesdits identificateurs de deuxième RFID.

2. Système selon la revendication 1 dans lequel
(a) ni ladite première RFID ni ladite deuxième RFID ne comprennent des informations pouvant être transmises concernant ledit module d'identification d'abonné ; ou
(b) ledit module d'identification d'abonné, avec ladite deuxième RFID, est monté physiquement dans ledit et est amovible par rapport audit dispositif de communication mobile.

3. Combinaison du système selon la revendication 1 et :
(a) au moins un accessoire pour ledit dispositif de communication mobile, dans laquelle ledit accessoire a une troisième RFID fixée à celui-ci ou son emballage et dans lequel ladite troisième RFID a un identificateur qui est différent des identificateurs de ladite première RFID et ladite deuxième RFID ; ou
(b) au niveau d'un point de vente au détail, un premier lecteur RFID de détail à proximité de lecture d'une caisse de détail, ledit premier lecteur RFID de détail étant adapté pour lire des identificateurs de RFID à partir d'un achat au détail sélectionné à partir du groupe comprenant : (a) un dispositif de communication mobile, (b) un accessoire pour un dispositif de communication mobile, ou, (c) à la fois un dispositif de communication mobile et un accessoire ; ou
(c) un expéditeur pour l'expédition dudit dispositif de communication mobile, ledit expéditeur ayant une RFID d'expéditeur.

4. Combinaison selon la revendication 2, option (a) et au moins un accessoire pour ledit dispositif de communication mobile, dans laquelle ledit accessoire a une troisième RFID fixée à celui-ci ou son emballage et dans lequel ladite troisième RFID a un identificateur qui est différent d'identificateurs de ladite première RFID et de ladite deuxième RFID.

5. Combinaison selon la revendication 3, option (b), comprenant en outre, au niveau de points de vente au détail, un deuxième lecteur RFID de détail à proximité de lecture d'un dispositif d'affichage d'accessoires pour des dispositifs de communication mobile, ledit deuxième lecteur RFID de détail étant adapté pour lire des identificateurs RFID à partir de l'ajout au stock et le retrait du stock d'articles sélectionnés à partir du groupe comprenant : (a) un dispositif de communication mobile, (b) un accessoire pour un dispositif de communication mobile, ou, (c) à la fois un dispositif de communication mobile et un accessoire; et dans lequel, facultativement, la combinaison comprend en outre au moins un ordinateur pour transférer à partir desdits points de détail des données d'identificateur RFID à une base de données pour associer lesdites données d'achat à des abonnés de dispositifs de communication mobile correspondants.

6. Combinaison selon la revendication 4 dans laquelle ledit module d'identification d'abonné, avec ladite deuxième RFID, est monté physiquement dans ledit et amovible par rapport audit dispositif de communication mobile.

7. Combinaison selon la revendication 6, dans laquelle la combinaison comprend en outre, au niveau d'un point de vente au détail, un premier lecteur RFID de détail à proximité de lecture d'une caisse de détail, ledit premier lecteur RFID de détail étant adapté pour lire des identificateurs de RFID à partir d'un achat au détail sélectionné à partir du groupe comprenant : (a) un dispositif de communication mobile, (b) un accessoire pour un dispositif de communication mobile, ou, (c) à la fois un dispositif de communication mobile et un accessoire.

8. Combinaison selon la revendication 7, dans laquelle la combinaison comprend en outre, au niveau de points de vente au détail, un deuxième lecteur RFID de détail à proximité de lecture d'un dispositif d'affichage d'accessoires pour des dispositifs de communication mobile, ledit deuxième lecteur RFID de détail étant adapté pour lire des identificateurs RFID à partir de l'ajout au stock et le retrait du stock d'articles sélectionnés à partir du groupe comprenant : (a) un dispositif de communication mobile, (b) un accessoire pour un dispositif de communication mobile, ou, (c) à la fois un dispositif de communication mobile et un accessoire.

9. Combinaison selon la revendication 8, dans laquelle la combinaison comprend en outre au moins un ordinateur pour transférer à partir desdits points de détail des données d'identificateur RFID à une base de données pour associer lesdites données d'achat à des abonnés de dispositifs de communication mobile correspondants.

10. Combinaison selon la revendication 9 dans laquelle ledit dispositif de communication mobile est accompagné d'un expéditeur pour expédier ledit dispositif de communication mobile, ledit expéditeur ayant une RFID d'expéditeur.

11. Procédé comprenant les actions suivantes :
le maintien d'un stock en vrac de dispositifs de communication mobile compacts pour permettre une communication vocale en utilisant un réseau de communication, lesdits dispositifs de communication mobile ayant une première RFID ;
le maintien d'un stock en vrac de modules d'identification d'abonné pouvant être installés dans lesdits dispositifs de communication mobile, lesdits modules ayant une deuxième RFID ayant un identificateur qui est différent d'un identificateur de ladite première RFID ;
l'installation de modules d'identification d'abonné dans l'un correspondant desdits dispositifs de communication ;
le balayage par radiofréquence de ladite première RFID et de ladite deuxième RFID ;
l'entrée dans une base de données informatique de système informatique d'identificateurs à partir dudit balayage de ladite première RFID et de ladite deuxième RFID, ladite base de données stockant des associations entre lesdits identificateurs de première RFID et lesdits identificateurs de deuxième RFID.

12. Procédé selon la revendication 11 dans lequel :
(a) le procédé comprend en outre les actions suivantes : la mise en place dudit dispositif de communication dans un emballage; et la mise en place d'au moins un accessoire pour ledit dispositif de communication mobile dans ledit emballage, dans lequel ledit accessoire a une troisième RFID et dans lequel ladite troisième RFID a un identificateur qui est différent des identificateurs de ladite première RFID et ladite deuxième RFID ; ou
(b) le procédé comprend en outre les actions suivantes : la mise en place dudit dispositif de communication dans un emballage ; et, dans lequel l'action de balayage par radiofréquence a lieu après l'action de mise en place dudit dispositif de communication dans ledit emballage ; ou
(c) le procédé comprend en outre l'action suivante : la transmission électronique, à un fournisseur de services pour ledit réseau de communication, de données à partir de ladite base de données comprenant lesdits identificateurs de ladite première RFID et ladite deuxième RFID, et pour lesdites associations entre lesdits identificateurs de première RFID et lesdits identificateurs de deuxième RFID ; ou
(d) le procédé comprend en outre les actions de suivi de stock desdits dispositifs de communication sur la base du balayage de ladite première RFID et de suivi de stock desdits modules d'identification d'abonné sur la base du balayage de ladite deuxième RFID ; ou
(e) le procédé comprend en outre l'action suivante : l'expédition de dispositifs de communication à un point de vente au détail, dans lequel ledit point de vente au détail comprend : un premier lecteur RFID de détail à proximité de lecture d'une caisse de détail, ledit premier lecteur RFID de détail étant adapté pour lire des identificateurs de RFID à partir d'un achat au détail sélectionné à partir du groupe comprenant: (a) un dispositif de communication mobile, (b) un accessoire pour un dispositif de communication mobile, ou, (c) à la fois un dispositif de communication mobile et un accessoire; un deuxième lecteur RFID de détail à proximité de lecture d'un dispositif d'affichage de détail d'accessoires pour des dispositifs de communication mobile, ledit deuxième lecteur RFID de détail étant adapté pour lire des identificateurs RFID à partir de l'ajout au stock de détail et le retrait du stock de détail d'articles sélectionnés à partir du groupe comprenant : (a) un dispositif de communication mobile, (b) un accessoire pour un dispositif de communication mobile, ou, (c) à la fois dispositif de communication mobile et un accessoire ; ou
(f) le procédé comprend en outre l'action de mise en place dans un emballage avec ledit dispositif de communication d'un expéditeur pour l'expédition dudit dispositif de communication mobile, ledit expéditeur ayant une RFID d'expéditeur.

13. Procédé selon la revendication 12, dans lequel
(i) le procédé est conforme à l'option (a) et dans lequel l'action de balayage par radiofréquence a lieu après l'action de mise en place dudit dispositif de communication dans ledit emballage ; ou
(ii) le procédé est conforme à l'option (e) et comprend en outre l'action de transmission électronique, à partir desdits points de détail, de données d'identificateurs RFID à une base de données pour associer lesdites données d'achat à des abonnés correspondants de dispositif de communication mobile.

14. Procédé selon la revendication 13, option (i), le procédé comprenant en outre l'action suivante : la transmission électronique, à un fournisseur de services pour ledit réseau de communication, de données à partir de ladite base de données comprenant lesdits identificateurs de ladite première RFID et ladite deuxième RFID, et pour lesdites associations entre lesdits identificateurs de première RFID et lesdits identificateurs de deuxième RFID.

15. Procédé selon la revendication 14, le procédé comprenant en outre les actions de suivi de stock desdits dispositifs de communication sur la base du balayage de ladite première RFID et de suivi de stock desdits modules d'identification d'abonné sur la base du balayage de ladite deuxième RFID.

16. Procédé selon la revendication 15, le procédé comprenant l'action suivante : l'expédition de dispositifs de communication à un point de vente au détail, dans lequel ledit point de vente au détail comprend : un premier lecteur RFID de détail à proximité de lecture d'une caisse de détail, ledit premier lecteur RFID de détail étant adapté pour lire des identificateurs de RFID à partir d'un achat au détail sélectionné à partir du groupe comprenant : (a) un dispositif de communication mobile, (b) un accessoire pour un dispositif de communication mobile, ou, (c) à la fois un dispositif de communication mobile et un accessoire ; un deuxième lecteur RFID de détail à proximité de lecture d'un dispositif d'affichage de détail d'accessoires pour des dispositifs de communication mobile, ledit deuxième lecteur RFID de détail étant adapté pour lire des identificateurs RFID à partir de l'ajout au stock de détail et le retrait du stock de détail d'articles sélectionnés à partir du groupe comprenant : (a) un dispositif de communication mobile, (b) un accessoire pour un dispositif de communication mobile, ou, (c) à la fois un dispositif de communication mobile et un accessoire.

17. Procédé selon la revendication 16, le procédé comprenant en outre l'action de transmission électronique à partir desdits points de détail de données d'identificateurs RFID à une base de données pour associer lesdites données d'achat à des abonnés correspondants de dispositif de communication mobile ; et dans lequel, facultativement, le procédé comprend en outre l'action de mise en place dans ledit emballage d'un expéditeur pour l'expédition dudit dispositif de communication mobile, ledit expéditeur ayant une RFID d'expéditeur.
